Europäisches Patentamt

European Patent Office

Office européen des brevets

(19)

(11) EP 0 489 518 B1

(12) EUROPEAN PATENT SPECIFICATION

(45) Date of publication and mention
of the grant of the patent:
**12.03.1997 Bulletin 1997/11**

(51) Int Cl.⁶: **C08K 9/06**, C08L 83/07

(21) Application number: **91310748.8**

(22) Date of filing: **21.11.1991**

(54) **Extrudable curable organosiloxane compositions exhibiting reduced compression set**

Extrudierbare, härtbare Organosiloxanzusammensetzungen mit reduziertem Druckverformungsrest

Compositions organosiloxaniques, extrudable et reticulable, avec déformation permanente réduite

(84) Designated Contracting States:
**DE FR GB**

(30) Priority: **05.12.1990 US 622660**

(43) Date of publication of application:
**10.06.1992 Bulletin 1992/24**

(73) Proprietor: **DOW CORNING CORPORATION
Midland Michigan 48686-0994 (US)**

(72) Inventors:
• **Gray, Thomas Edward
  Midland, Michigan 48640 (US)**
• **Jensen, Jary David
  Midland, Michigan 48640 (US)**

(74) Representative: **Dowden, Marina et al
Elkington and Fife
Prospect House,
8 Pembroke Road
Sevenoaks, Kent TN13 1XR (GB)**

(56) References cited:
EP-A- 0 042 208          EP-A- 0 374 951
EP-A- 0 378 785

• **DERWENT QUESTEL TELESYST. (WPIL),
accession no. 87-233052 [33], Derwent
Publications Ltd, London, GB; & JP-A-62 158 755**

## Description

This invention relates to extrudable organosiloxane compositions. More particularly, this invention relates to extrudable organosiloxane compositions that can be cured by a platinum-catalyzed hydrosilation reaction to form elastomers exhibiting superior physical properties, particularly compression set tear strength and durometer hardness values, without sacrificing other desirable properties such as tensile strength and processability of the curable composition.

EP-A-0374951 relates to an addition reaction-type silicone composition particularly suitable for coating rollers used in electrophotographic copying apparatus, printers or other image forming apparatus. The silicone composition may comprise a silicone compound which is an addition reaction-type silicone rubber prepared from a dimethylpolysiloxane having a vinyl group, a methylhydrogen polysiloxane and a platinum-base catalyst, and in addition comprises a reactive group-containing modified silicic acid powder which has had its surface modified with an alkylsilane, hexamethyldisilazane, a dimethylsilicone oil, or a mixture thereof, an unsaturated group-containing silane compound and an inorganic fine powder carrying a surfactant. Furthermore, EP-A-0042208 discloses a method for the preparation of hydrophobic reinforcing silica fillers which are treated with at least one hydrophobe agent which is selected from the group consisting of $R_nSiZ_{4-n}$, $(R_3Si)_2NH$, $(R_3Si)_2O$, $(R_2SiO)_x$, $(R_2SiNH)_x$, $R'O(R_2SiO)_yR'$, $(R_3Si)_2NR''$ and $(R_2SiNR'')_x$ wherein each R is selected from the group consisting of aliphatic hydrocarbon radicals of from 1 to 6 inclusive carbon atoms, halogenated alkyl radicals of 1 to 10 inclusive carbon atoms and phenyl radicals, each R' is hydrogen or R'', each R'' is a alkyl radical of 1 to 4 inclusive carbon atoms, each Z is -OR', -NHR'', or -NR''$_2$, $\underline{n}$ has an average value of from 2 to 3 inclusive, x has an average value of from 3 to 6 inclusive, $\underline{y}$ has an average value of from 1 to 12 inclusive, the amount of said hydrophobe agent present being sufficient to provide at least 0.05 moles of hydrophobe agent per mole of theoretical $SiO_2$ units present in said alkyl silicate.

The present inventors have discovered how to decrease the compression values of organosiloxane elastomers prepared by curing compositions comprising a liquid diorganoalkenylsiloxy terminated polydiorganosiloxane, an organohydrogensiloxane as the curing agent, a reinforcing silica filler and a platinum-group metal-containing hydrosilation catalyst. They have accomplished this by using sym-tetramethyldivinyldisilazane as at least a portion of the organosilicon compounds used to treat the reinforcing silica filler and by maintaining the molar ratio of silicon-bonded hydrogen atoms to vinyl or other ethylenically unsaturated hydrocarbon radicals in the curable composition within the range of from 0.8 to 2.

An objective of this invention is to define a class of liquid curable organosiloxane compositions that can be cured to yield elastomers exhibiting a value for compression set, measured in accordance with ASTM test procedure D395, of 30 percent or less without sacrificing other desired physical properties of the cured elastomer, including tear strength and durometer hardness. A preferred class of the present compositions can be transported by pumping using conventional equipment.

The present compositions are cured using a platinum-catalyzed hydrosilation reaction.

This invention provides an improved curable and extrudable organosiloxane composition comprising the product obtained by mixing to homogeneity, (A) 100 parts by weight of a first diorganoalkenylsiloxy terminated polydiorganosiloxane in which the only alkenyl radicals present on the non-terminal silicon atoms thereof result from impurities present in the starting materials or due to rearrangements occuring during preparation, represented by the formula:

$$YR^1_2SiO(R^2_2SiO)_xSiR^1_2Y$$

in which Y represents an alkenyl radical containing from 2 to 10 carbon atoms, $R^1$ and $R^2$ are individually monovalent hydrocarbon radicals or substituted monovalent hydrocarbon radicals containing from 1 to 20 carbon atoms, $R^1$ and $R^2$ are substantially free of ethylenic unsaturation and $\underline{x}$ represents a degree of polymerization equivalent to a viscosity of up to 20 Pa·s at 25°C;

(B) an amount sufficient to cure said composition of an organohydrogensiloxane that is miscible with (A) and contains an average of more than two silicon-bonded hydrogen atoms per molecule, where the organic groups present in (A) and (B) are monovalent hydrocarbon or halogenated hydrocarbon radicals;

(C) an hydrosilation catalyst consisting essentially of a platinum-group metal or a compound thereof, the concentration of said catalyst being sufficient to promote curing of said composition at a temperature of from ambient to 250°C,

wherein in order to ensure sufficient miscibility the silicon-bonded hydrocarbon radicals that are present in the highest concentration in ingredients (A), (B) and (C) are selected from the same class, and

(D) from 10 to 60 weight percent, based on the weight of said composition, of finely divided silica as the reinforcing filler which is treated with more than one organosilicon compounds,

characterised in the presence of a sym-tetraalkyldialkenyldisilazane as from 1 to 5 weight percent, preferably 1 to 4.6 weight percent of the organosilicon compounds used to treat said filler and a molar ratio of silicon-bonded hydrogen atoms in said organohydrogen-siloxane to alkenyl radicals in all polydiorganosiloxanes present in said curable composition of from 0.8 to 2.0.

The inventive features considered responsible for the low values of compression set that characterize cured elastomers prepared from the present curable compositions are (1) the type of organosilicon compounds used to treat the reinforcing silica filler, from 1 to 5 weight percent of which are disilazanes containing two silicon-bonded alkenyl radicals, such as sym-tetramethyldivinyldisilazane, and (2) a molar ratio of silicon-bonded hydrogen atoms to alkenyl radicals (referred to as the SiH/alkenyl ratio) of from 0.8 to 2.0, preferably from 1 to 1.5. The accompanying examples demonstrate an increase in compression set values outside of these ranges even when using the filler treating agents of this invention.

Preferred compositions include calcium oxide or hydroxide to further reduce compression set as taught in U.S Patent No. 4,301,056 for peroxide cured silicone rubber.

Compression set is typically determined using ASTM test procedure D395. In accordance with method B of this procedure a sample of cured elastomer of known thickness (A), typically 1.25 cm., is compressed to 75 percent of its initial thickness (B) in a suitable clamping device and then heated at a temperature of 177°C. for 22 hours. The sample is then allowed to stand for 0.5 hour under ambient conditions, at which time its thickness (C) is measured.

Compression set values are calculated using the formula [(A-C)/(A-B)]x100, where A represents the thickness of the initial sample prior to compression, B represents the thickness to which the sample is compressed during the test procedure and C represents the thickness of the sample following recovery from compression.

Low values of compression set are required for certain end-use applications during which the cured elastomer is compressed between two mating surfaces to serve as a seal or gasket.

The ingredients of the present compositions will now be discussed in detail.

The polydiorganosiloxane containing only terminal alkenyl radicals is referred to hereinafter as ingredient A. This ingredient exhibits a viscosity of from 5 to 100 Pa·s and contains vinyl or other alkenyl radicals only at the terminal positions of the molecule.

When it is desired to increase the values of certain physical properties, such as tensile and tear strength, exhibited by cured elastomers prepared from the curable compositions of this invention, the compositions preferably contain from 0.5 to 30 percent based on the combined weight of alkenyl-substituted polydiorganosiloxanes of a second diorganoalkenylsiloxy-terminated polydiorganosiloxane, referred to hereinafter as ingredient A', that contains alkenyl radicals on from 1 to 5 mole percent of the non-terminal repeating siloxane units.

Cured elastomers prepared using preferred compositions of this invention exhibit tear strength values of 35-45 kilonewtons/meter.

Experimental data for elastomers prepared using compositions of this invention containing optional ingredient A' and an embodiment of ingredient A exhibiting a viscosity of up to 20 Pa·s demonstrate that the tear strength of the elastomer reaches a maximum as the concentration of ingredient A' approaches 3 percent, based on the combined weight of ingredients A and A' and decreases with increasing concentration of ingredient A' beyond the 3 percent level.

The alkenyl radicals present in ingredients A and A' contain from 2 to 10 carbon atoms. Preferred alkenyl radicals are terminally unsaturated and include, but are not limited to, vinyl, allyl and 5-hexenyl.

The silicon-bonded organic groups present in ingredients A and A', in addition to alkenyl radicals, are the monovalent hydrocarbon or substituted hydrocarbon radicals described in detail in the following portions of this specification.

The term "essential absence of non-terminal alkenyl radicals" used to describe ingredient A means that the only alkenyl radicals present on the non-terminal silicon atoms of this ingredient result from impurities present in the reactants used to prepare this ingredient or from undesired rearrangements occurring during preparation of this ingredient.

Ingredient A is a diorganoalkenylsiloxy-terminated polydiorganosiloxane and can be represented by the average general formula

$$YR^1_2SiO(R^2_2SiO)_xSiR^1_2Y$$

where Y represents an alkenyl radical as defined in a preceding section of this specification, $R^1$ and $R^2$ are individually monovalent hydrocarbon radicals or substituted monovalent hydrocarbon radicals, $R^1$ and $R^2$ are substantially free of ethylenic unsaturation and $\underline{x}$ represents a degree of polymerization equivalent to a viscosity of up to 20 Pa·s at 25°C. In preferred embodiments, the viscosity of ingredient A is from 5 to 15 Pa·s.

The $R^1$ and $R^2$ radicals bonded to the silicon atoms of ingredient A contain from 1 to 20 carbon atoms and can be identical or different. Because ingredient A is an extrudable liquid at 25°C., at least one of the $R^2$ radicals on each of the non-terminal silicon atoms is lower alkyl, most preferably methyl. The remaining $R^2$ radical can be alkyl such as methyl or ethyl; substituted alkyl such as chloromethyl, 3-chloropropyl or 3,3,3-trifluoropropyl; cycloalkyl such as cyclohexyl; or aryl such as phenyl. Most preferably, any $R^1$ and $R^2$ radicals other than methyl are phenyl or 3,3,3-trifluoropropyl, this preference being based on the availability of the intermediates used to prepare these polydiorganosiloxanes and the properties of cured elastomers prepared by curing compositions containing these polymers.

Methods for preparing the liquid polydiorganosiloxanes used as ingredients A and optional ingredient A' of the present compositions by hydrolysis and condensation of the corresponding halosilanes or cyclic polydiorganosiloxanes are sufficiently disclosed in the patent and other literature that a detailed description in this specification is not necessary.

Optional ingredient A' is a liquid diorganoalkenylsiloxy-terminated polydiorganosiloxane that can be represented by the average general formula

$$Y'R^3{}_2SiO(R^4{}_2SiO)_y(Y'R^4SiO)_zSiR^3{}_2Y'$$

In this formula, Y' represents an alkenyl radical as defined for the Y radical of ingredient A, $R^3$ and $R^4$ are selected from the same group of monovalent hydrocarbon radicals and substituted monovalent substituted hydrocarbon radicals as $R^1$ and $R^2$. Because ingredients A and A' should be miscible with one another, the silicon-bonded hydrocarbon radicals present in these ingredients should be selected from the same class, i.e. lower alkyl. These hydrocarbon radicals, including Y and Y' are preferably identical.

The degree of polymerization represented by the sum of $\underline{y}$ and $\underline{z}$ is equivalent to a viscosity of from 0.1 to 10 Pa·s, preferably from 0.1 to 1 Pa·s, and the ratio z/(y+z) is from 0.01 to 0.05, which specifies the requirement for this ingredient that from 1 to 5 mole percent of the non-terminal repeating units contain a vinyl radical. The degree of polymerization of ingredient A' is preferably less than the degree of polymerization of Ingredient A.

Preferred embodiments of ingredient A include but are not limited to dimethylvinylsiloxy-terminated polydimethylsiloxanes, dimethylvinylsiloxy-terminated polymethyl-3,3,3-trifluoropropylsiloxanes, dimethylvinylsiloxy-terminated dimethylsiloxane/3,3,3-trifluoropropylmethylsiloxane copolymers and dimethylvinylsiloxy-terminated dimethylsiloxane/methylphenylsiloxane copolymers.

Preferred embodiments of optional ingredient A' encompass all of the preferred polydiorganosiloxanes for ingredient A with the addition of from 1 to 5 mole percent of non-terminal organoalkenylsiloxane units, where the preferred organic group are alkyl containing from 1 to 4 carbon atoms, fluoroalkyl such as 3,3,3-trifluoropropyl and aryl such as phenyl.

The vinyl radicals present in these preferred embodiments of ingredients A and A' can be replaced by other ethylenically unsaturated radicals such as allyl and 5-hexenyl.

The organosiloxane compositions of this invention are cured by a platinum catalyzed hydrosilation reaction. The curing agent is an organohydrogensiloxane containing an average of more than two silicon-bonded hydrogen atoms per molecule. The organohydrogensiloxane contains from as few as four silicon atoms per molecule up to an average of 20 or more and can have a viscosity of up to 10 Pa·s or higher at 25°C. The repeating units of this ingredient include but are not limited to $HSiO_{1.5}$, $R^5HSiO$ and/or $R^5{}_2HSiO_{0.5}$ in addition to one or more of monoorganosiloxy, diorganosiloxane, triorganosiloxy and $SiO_{4/2}$ units. In these formulae, $R^5$ represents a monovalent hydrocarbon or halocarbon radical as defined hereinabove for the R radical of ingredient A.

One preferred class of organohydrogensiloxanes are copolymers consisting essentially of the repeating units $R_3SiO_{1/2}$, $R_2SiO$, RHSiO and $RSiO_{3/2}$ units, where the R radicals are free of ethylenic unsaturation and are individually selected from monovalent hydrocarbon and halogenated hydrocarbon radicals and the $RSiO_{3/2}$ units constitute from 0.5 to 50 mole percent of the copolymer. Copolymers of this type can be prepared by a controlled hydrolysis of a mixture comprising the corresponding organosilicon halides, such as the chlorides or the corresponding alkoxides. These and other methods for preparing the preferred organohydrogensiloxanes of this invention are sufficiently well known that a detailed description is not required in this specification.

A second preferred class of organohydrogensiloxanes contain repeating units represented by the formulae $R^5{}_2HSiO_{1/2}$ and $SiO_{4/2}$. The concentration of $R^5{}_2HSiO_{1/2}$ units is equivalent to a concentration of silicon-bonded hydrogen atoms in the copolymer of from 0.5 to 5 weight percent.

Proper curing of the present compositions requires that ingredients A, B and C be miscible with one another. To ensure sufficient miscibility the silicon-bonded hydrocarbon radicals that are present in the highest concentration in these ingredients should be selected from the same class, e.g. alkyl radicals. These hydrocarbon radicals are preferably identical. In particularly preferred compositions, these hydrocarbon radicals are methyl or combinations of methyl with either 3,3,3-trifluoropropyl or phenyl.

The molar ratio of silicon-bonded hydrogen atoms to vinyl or other alkenyl radicals, referred to as the SiH/vinyl ratio, in combination with the use of a hexaorganodisilazane containing alkenyl radicals as at least a portion of the silica treating agent are critical with respect to the compression set values of the cured elastomer. For the present curable compositions, the SiH/vinyl ratio is from 0.8 to 2.0, optionally from 0.8 to 1.5. The optimum ratio for particular compositions will be determined at least in part by the molecular weights of ingredients A and optional-ingredient A', the type of curing agent and the concentration of any resinous organosiloxane copolymer described hereinafter. To minimize the compression set values in preferred compositions of this invention, this ratio is from about 1 to 1.5.

The optimum range of this ratio for other curable compositions of this invention can readily be determined by those skilled in the art with a minimum of experimentation.

Hydrosilation reactions are typically conducted in the presence of a catalyst (Ingredient C) that is a metal from the platinum group of the periodic table or a compound of such a metal. Platinum, rhodium and compounds of these metals have been shown to catalyze hydrosilation reactions.

Platinum compounds such as hexachloroplatinic acid and particularly complexes of these compounds with relatively low molecular weight vinyl-containing organosiloxane compounds are preferred catalysts because of their high activity and compatibility with the organosiloxane reactants. These complexes are described in U.S. Patent No. 3,419,593 that issued to David N. Willing on December 31, 1968.

Complexes with low molecular weight organosiloxanes wherein the silicon-bonded hydrocarbon radicals are vinyl and either methyl or 3,3,3-trifluoropropyl are particularly preferred because of their ability to catalyze a rapid curing of the elastomer at temperatures of at least about 70°C.

The platinum containing catalyst can be present in an amount equivalent to as little as one part by weight of platinum per one million parts of curable composition. Catalyst concentrations equivalent to from 5 to 50 parts of platinum per million of curable composition are preferred to achieve a practical curing rate. Higher concentrations of platinum provide only marginal improvements in curing rate and are therefore economically unattractive, particularly when the preferred catalysts are used.

Mixtures of the aforementioned vinyl-containing reactants, curing agents and platinum-containing catalysts may begin to cure at ambient temperature. To obtain a longer working time or "pot life", the activity of the catalyst under ambient conditions can be retarded or suppressed by addition of a suitable inhibitor.

Known platinum catalyst inhibitors include the acetylenic compounds disclosed in U.S. Patent No. 3,445,420, which issued on May 20, 1969 to Kookootsedes et al. Acetylenic alcohols such as 2-methyl-3-butyn-2-ol constitute a preferred class of inhibitors that will suppress the activity of a platinum-containing catalyst at 25°C. Compositions containing these catalysts typically require heating at temperatures of 70°C. or above to cure at a practical rate.

If it is desired to increase the pot life of a curable composition under ambient conditions, this can be accomplished using an olefinically substituted siloxane of the type described in U.S. Patent No. 3,989,667, which issued on November 2, 1976 to Lee and Marko. Cyclic methylvinylsiloxanes are preferred.

Inhibitor concentrations as low as one mole of inhibitor per mole of platinum will in some instances impart satisfactory storage stability and cure rate. In other instances, inhibitor concentrations of up to 500 or more moles of inhibitor per mole of platinum are required. The optimum concentration for a given inhibitor in a given composition can readily be determined by routine experimentation and does not constitute part of this invention.

To achieve the high levels of tear strength and other physical properties that characterize cured elastomers prepared using the compositions of this invention, the compositions must contain a reinforcing silica filler. This type of filler is treated with more than one of the known silica treating agents to prevent a phenomenon referred to as "creping" or "crepe hardening" during processing of the curable composition.

Any finely divided form of silica can be used as the reinforcing filler. Colloidal silicas are preferred because of their relatively high surface area, which is typically at least 50 square meters per gram. Fillers having surface areas of at least 200 square meters per gram are preferred for use in the present method. Colloidal silicas can be prepared by precipitation or a fume process. Both of these preferred types of silica are commercially available.

The amount of finely divided silica used in the present compositions is at least in part determined by the physical properties desired in the cured elastomer. Liquid or pumpable polyorganosiloxane compositions typically contain from about 10 to 60 percent by weight of silica, based on the weight of polydiorganosiloxane. This value is preferably from 30 to 50 percent.

Silica treating agents are typically low molecular weight organosilicon compounds containing silicon-bonded hydroxyl groups or groups that can be hydrolyzed to hydroxyl groups in the presence of water. Typical hydrolyzable groups include halogen atoms such as chlorine amino and other groups containing a silicon-bonded nitrogen atom.

In accordance with the present invention, from 1 to 5.0 weight percent, preferably 1 to 4.6 weight percent of the organosilicon compounds used to treat the reinforcing silica filler are hexaorganodisilazanes containing at least two alkenyl radicals per molecule. The alkenyl radicals typically contain from 2 to 10 carbon atoms. Vinyl is a preferred alkenyl radical based on the availability of the intermediates used to prepare the disilazane. Most preferably, the remaining silicon-bonded hydrocarbon radicals are methyl and the silica treating agent is sym-tetramethyldivinyldisilazane.

A preferred concentration range for the disilazane containing silicon-bonded alkenyl radicals is from 2 to 4 weight percent of the total silica treating agents.

In addition to the ingredient A, optional ingredient A', curing agent, curing catalyst and treated silica filler the organosiloxane compositions of this invention can contain one or more additives that are conventionally present in curable compositions of this type. These materials are added to impart or enhance certain properties of the cured elastomer or facilitate processing of the curable composition. A small amount of water can be added together with the silica treating agent(s) as a processing aid.

Typical additives include but are not limited to pigments, dyes, adhesion promoters, flame retardants, heat and/or ultraviolet light stabilizers and resinous organosiloxane copolymers to enhance the physical properties of the cured elastomer.

Diatomaceous earth and calcium hydroxide are two preferred additives based on their ability to reduce the degradation in physical properties, particularly a decrease in tensile and tear strengths and an increase in compression set value, that occurs when the cured elastomer comes into contact with oil heated to temperatures of 150°C. In addition to improving the resistance of elastomers to property degradation during long term exposures, the presence of calcium hydroxide also reduces the compression set of the cured elastomer.

The silica filler can be treated in the presence of at least a portion of the other ingredients of the present compositions by blending these ingredients together until the filler is completely treated and uniformly dispersed throughout the composition to form a homogeneous material. The ingredients that are present during treatment of the silica typically include the silica treating agents and at least a portion of the polydiorganosiloxanes referred to herein as ingredients A and optional ingredient A'. The organohydrogensiloxane and platinum-containing catalyst are typically added after treatment of the silica has been completed.

Irrespective of the type of mixer used, blending of the silica, filler treating agent and ingredients A and A' is continued while the composition is heated at temperatures from about 100 to 250°C. under reduced pressure to remove volatile materials. The resultant product is then cooled prior to being blended with the organohydrogensiloxane (Ingredient B) and/or the platinum catalyst (Ingredient C), depending upon whether it is desired to prepare a one-part or two-part curable composition of this invention. The optional additives referred to hereinbefore can be added at this time or during blending of the silica with ingredients A and A'.

In-situ treatment of the silica can require anywhere from 15 minutes to 2 hours, depending upon the amount of material being processed, the viscosity of the material and the shear rate to which the material is subjected during processing.

Alternatively, treatment of the silica can occur before the silica is blended with other ingredients of the present compositions. Methods for treating finely divided silica fillers prior to incorporating the silica into a polyorganosiloxane composition are known in the art.

To ensure adequate blending of all ingredients, the mixing equipment in which the present compositions are prepared should be capable of subjecting the composition to a high rate of shear. The advantage of using this type of a "high intensity" mixer to prepare silica filled polyorganosiloxane compositions is taught in U.S. Patent No. 3,690,804, which issued to Minuto on June 1, 1976. In accordance with the disclosure of this patent, the tip of the stirring device in the mixer is rotated at a speed of from 7.62 to 76.2 m/s (25 to about 250 feet per second), which would generate considerable shearing forces. The exemplified compositions are blended in a Henschel high intensity mixer wherein the rotor was operated at a speed of 3800 revolutions per minute, equivalent to a rotor tip speed of 47.85 m/s (157 feet per second).

Dough type mixers equipped with "sigma" shape blades, are not as efficient as mixers wherein the mixing surfaces are of a relatively flat "paddle" configuration. Examples of the paddle type mixers include the Henschel mixer disclosed in the aforementioned Minuto patent and certain mixers manufactured by Neulinger A.G. The blade is preferably rotated at a speed of at least 100 revolutions per minute.

Curable compositions prepared using the present method typically exhibit viscosities of about 0.5 up to about 1000 Pa·s at 25°C. To facilitate blending and transfer of the compositions and minimize entrapment of air during mixing, a viscosity of less than about 10 Pa·s at 25°C. is preferred for pumpable compositions.

Mixtures of ingredients A and optional ingredient A' with the curing agent (ingredient B) and the platinum-containing catalyst may begin to cure under conditions encountered during storage of these composition, even in the presence of a catalyst inhibitor. To ensure long term storage stability it is sometimes necessary to separate the curing agent from the catalyst until it is desired to cure the composition. This is typically achieved by packaging the curing agent and curing catalyst in separate containers or by using one-part compositions containing a curing catalyst that is microencapsulated within one or more layers of a thermoplastic organic polymer or a thermoplastic polyorganosiloxane.

Methods for microencapsulating platinum-containing hydrosilation catalysts are described in the art. For example, one part compositions curable by a platinum-catalyzed hydrosilation reaction and containing as the hydrosilation catalyst a liquid platinum compound that is microencapsulated within a layer of a thermoplastic organic polymer, together with methods for preparing the micro-encapsulated catalyst are described in U.S. Patent No. 4,766,176, which issued to Lee et al. on August 23, 1988.

The present curable compositions can be formed into shaped articles by press molding, injection molding, extrusion or any of the other methods used to fabricate organosiloxane compositions.

In the absence of one of the aforementioned catalyst inhibitors and/or an encapsulated catalyst, the compositions will cure at ambient temperature over a period of several hours or days or within several minutes when heated at temperatures of up to 250°C. Compositions containing one of these catalyst inhibitors are typically cured by heating them for several minutes at temperatures of from 50 to about 250°C. A preferred range is from 100 to 200°C. Compositions containing a microencapsulated catalyst should be heated to a temperature at least equal to the melting or softening temperature of the encapsulating polymer.

Cured elastomerie articles prepared using the curable compositions of this invention comprising a tetraalkyldialkenyldisilazane, exhibit compression set values below 30 percent, preferably below 25 percent, without adversely affecting other desirable properties of the cured elastomer, such as durometer hardness or the extrudability of the composition from which it is formed. This unique combination of properties make the elastomers desirable for a number of end use applications, including gaskets and fabricated articles wherein at least a portion of the article is relatively thin and subjected to large amounts of stress. Articles of this type include diaphragms and bladders.

The following examples describe preferred curable compositions of this invention and the desirable properties of elastomers, particularly low values of compression set and high durometer hardness values, prepared by curing these compositions. The examples are intended to illustrate the present invention and should not be interpreted as limiting the invention as defined in the accompanying claims. Unless indicated to the contrary, all parts and percentages are by weight and all viscosities were measured at 25°C.

Example 1

This example demonstrates the lower values of compression set achieved when a hexaorganodisilazane containing two vinyl radicals per molecule is used as a portion of the silica treating agent in place of a vinyl-containing hydroxyl-terminated polydiorganosiloxane.

The organosiloxane compositions were prepared by blending to homogeneity in a dough type mixer the entire quantity (3800 parts) of a fume silica having a nominal surface area of 380 $m^2$ per gram, 1689 parts of diatomaceous earth, 760 parts of hexamethyldisilazane as the first silica treating agent, 126.7 parts water and 8444 parts of a dimethylvinylsiloxy terminated polydimethylsiloxane having a viscosity of about 10 Pa·s at 25°C. (ingredient A). When all the filler had been blended into the resultant mixture, 22.8 parts of sym-tetramethyldivinyldisilazane were added as the second silica treating agent. Volatile materials were removed from the resultant mixture by circulating steam through the jacket of the mixer while maintaining the contents under reduced pressure.

Following completion of the heating cycle, the resultant mixture (I) was blended to homogeneity with 3540.4 parts of ingredient A together with 84.4 parts of a silanol terminated polydimethylsiloxane having a viscosity of about 0.04 Pa·s at 25°C. and containing about 4 weight percent of silicon-bonded hydroxyl groups as the third silica treating agent and 5.07 parts of methylbutynol as a catalyst inhibitor. The silica treating agent of this invention, sym-tetramethyldivinyldisilazane, constituted 2.6 percent of the combined weight of the three silica treating agents.

Curable compositions were prepared from the resultant mixture by combining 250 gram portions of this mixture with (1) the amount of an organohydrogensiloxane sufficient to provide one of the molar ratios of silicon-bonded hydrogen atoms to vinyl radicals present in ingredient A listed in the following Table 1 and (2) as the platinum-containing hydrosilation catalyst (ingredient C), a reaction product of hexachloroplatinic acid and sym-tetramethyldivinyldisiloxane that had been diluted with a liquid dimethylvinylsiloxy terminated polydimethylsiloxane in an amount sufficient to achieve a platinum content of 0.7 weight percent, based on the weight of both parts of the curable composition. The amount of catalyst was equivalent to 6.3 parts per million parts by weight of platinum, based on the weight of the complete curable composition.

Three different organohydrogensiloxanes were evaluated. One of these (B1) contains 0.8 weight percent silicon-bonded hydrogen, exhibits a viscosity of 0.016 Pa·s and corresponds to the general formula $(Me_3SiO_{1/2})_{12.7}$ $(Me_2SiO)_{29.1}$ $(MeHSiO)_{54.6}$ $(MeSiO_{3/2})_{3.6}$.

The second organohydrogensiloxane (B2), contains 1 weight percent of silicon-bonded hydrogen atoms, exhibits a viscosity of 0.024 Pa·s and can be represented by the general formula $(SiO_{4/2})_{4.4}(Me_2HSiO_{1/2})_8$.

The third organohydrogensiloxane (B3) was a trimethylsiloxy-terminated polydiorganosiloxane containing an average of five methylhydrogensiloxane units, three dimethylsiloxane units per molecule and about 0.8 weight percent of silicon-bonded hydrogen atoms.

To demonstrate the unique ability of the present silica treating agents to reduce the compression set values of cured elastomers prepared from the curable compositions of this invention, a second set of curable compositions were prepared for comparative purposes using the same types and amounts of ingredients as the compositions describe in the preceding section of this example, with the exception that the 22.8 parts of sym-tetramethyldivinyldisilazane were replaced with 67.6 parts of a hydroxyl-terminated dimethylsiloxane/methylvinylsiloxane copolymer containing 10 weight percent vinyl radicals and 16 weight percent of hydroxyl groups.

A second set of comparative compositions were prepared using a silica treating agent of the present invention and a molar ratio of SiH/vinyl that is above the present upper limit of 1.5.

All of the curable compositions were cured in the form of sheets having a thickness of 1.9 mm. by confining the compositions in a chase that was then placed on the lower platen of a hydraulic press. The press was then closed and the compositions cured by heating them for 5 minutes at a temperature of 150°C. under a pressure of 140kN/m (800 psi). Test samples were then cut from each of the cured sheets to determine the physical properties of the cured elastomer.

The American Society of Testing and Materials (ASTM) test procedures used to measure the properties evaluated included ASTM-395, method B for compression set values and ASTM-D2240, Shore A scale for durometer hardness values.

Table 1 summarizes the type of silica treating agent and the parts by weight of curing agents B1, B2 or B3 added to the 250 gram mixtures of ingredient A, filler, filler treating agent and platinum catalyst inhibitor that were used to prepare the curable compositions and the resultant molar ratio of silicon-bonded hydrogen atoms (SiH) to vinyl radicals. The filler treating agent of this invention, sym-tetramethyldivinyl-disilazane, was present in samples 1-24C and the comparative filler treating agent was used to prepare comparative samples 25C-48C.

The compression set and durometer hardness (Shore A scale) values of the samples are summarized in Table 2.

## TABLE 1
### Alkenyl-Substituted Disilazane As Silica Treating Agent

| Sample No. | Ingredient Curing Agent Type | Grams | SiH/Vinyl Ratio |
|---|---|---|---|
| 1 | B1 | 1.5 | 0.8 |
| 2 | B1 | 1.4 | 1.0 |
| 3 | B1 | 1.8 | 1.3 |
| 4 | B1 | 2.2 | 1.5 |
| 5 | B1 | 2.5 | 1.8 |
| 6 | B1 | 2.9 | 2.0 |
| 7C | B1 | 3.6 | 2.5 |
| 8C | B1 | 4.3 | 3.0 |
| 9 | B2 | 0.9 | 0.8 |
| 10 | B2 | 1.2 | 1.0 |
| 11 | B2 | 1.4 | 1.3 |
| 12 | B2 | 1.7 | 1.5 |
| 13 | B2 | 2.0 | 1.8 |
| 14 | B2 | 2.3 | 2.0 |
| 15C | B2 | 2.9 | 2.5 |
| 16C | B2 | 3.4 | 3.0 |
| 17 | B3 | 1.2 | 0.8 |
| 18 | B3 | 1.5 | 1.0 |
| 19 | B3 | 1.8 | 1.3 |
| 20 | B3 | 2.2 | 1.5 |
| 21 | B3 | 2.5 | 1.8 |
| 22 | B3 | 2.9 | 2.0 |
| 23C | B3 | 3.6 | 2.5 |
| 24C | B3 | 4.4 | 3.0 |

TABLE 1 (con't)

Alkenyl-Substituted Hydroxyl-Terminated Polydiorganosiloxane
As Silica Treating Agent  (Comparative Examples)

| Sample No. | Ingredient Curing Agent | | SiH/Vinyl Ratio |
|---|---|---|---|
| | Type | Grams | |
| 25C | B1 | 1.5 | 0.8 |
| 26C | B1 | 1.4 | 1.0 |
| 27C | B1 | 1.8 | 1.3 |
| 28C | B1 | 2.2 | 1.5 |
| 29C | B1 | 2.5 | 1.8 |
| 30C | B1 | 2.9 | 2.0 |
| 31C | B1 | 3.6 | 2.5 |
| 32C | B1 | 4.3 | 3.0 |
| 33C | B2 | 0.9 | 0.8 |
| 34C | B2 | 1.2 | 1.0 |
| 35C | B2 | 1.4 | 1.3 |
| 36C | B2 | 1.7 | 1.5 |
| 37C | B2 | 2.0 | 1.8 |
| 38C | B2 | 2.3 | 2.0 |
| 39C | B2 | 2.9 | 2.5 |
| 40C | B2 | 3.4 | 3.0 |
| 41C | B3 | 1.2 | 0.8 |
| 42C | B3 | 1.5 | 1.0 |
| 43C | B3 | 1.8 | 1.3 |
| 44C | B3 | 2.2 | 1.5 |
| 45C | B3 | 2.5 | 1.8 |
| 46C | B3 | 2.9 | 2.0 |
| 47C | B3 | 3.6 | 2.5 |
| 48C | B3 | 4.4 | 3.0 |

Samples identified by the letter C in addition to a number are included for comparative purposes. Samples 24C to 48C were prepared using a silica treating agent outside the scope of the present invention. Samples 7C, 8C, 15C, 16C, 23C and 24C were prepared using a silica treating agent of this invention; however, the SiH/vinyl molar ratio was above the present upper limit of 2.

TABLE 2

| Sample No. | Compression Set (%) | Hardness (Shore A Scale) |
|------------|---------------------|--------------------------|
| 1          | 29.5                | 37                       |
| 2          | 16.0                | 47                       |
| 3          | 17.2                | 52                       |
| 4          | 21.1                | 54                       |
| 5          | 26.0                | 52                       |
| 6          | 31.2                | 53                       |
| 7C         | 41.5                | 51                       |
| 8C         | 58.1                | 50                       |
| 9          | 33.8                | 30                       |
| 10         | 15.4                | 39                       |
| 11         | 12.6                | 51                       |
| 12         | 14.8                | 53                       |
| 13         | 26.8                | 55                       |
| 14         | 31.3                | 54                       |
| 15C        | 48.8                | 50                       |
| 16C        | 66.9                | 52                       |
| 17         | 43.4                | 32                       |
| 18         | 23.4                | 43                       |
| 19         | 18.9                | 45                       |
| 20         | 26.6                | 46                       |
| 21         | 37.1                | 45                       |
| 22         | 43.4                | 47                       |
| 23C        | 51.6                | 44                       |
| 24C        | 61.4                | 43                       |
| 25C        | 87.1                | 29                       |
| 26C        | 77.7                | 39                       |
| 27C        | 54.0                | 53                       |
| 28C        | 28.5                | 59                       |
| 29C        | 26.6                | 60                       |
| 30C        | 28.8                | 59                       |
| 31C        | 38.5                | 60                       |
| 32C        | 39.8                | 57                       |
| 33C        | 74.6                | 27                       |
| 34C        | 71.5                | 36                       |
| 35C        | 58.7                | 49                       |
| 36C        | 34.4                | 56                       |
| 37C        | 33.1                | 60                       |
| 38C        | 34.9                | 60                       |
| 39C        | 43.3                | 59                       |
| 40C        | 60.4                | 57                       |

| | | |
|---|---|---|
| 41C | 95.1 | 18 |
| 42C | 85.5 | 35 |
| 43C | 52.6 | 48 |
| 44C | 26.8 | 50 |
| 45C | 25.4 | 53 |
| 46C | 35.5 | 53 |
| 47C | 44.1 | 53 |
| 48C | 49.2 | 45 |

The data in Table 2 demonstrate the compression set of below 25% and the desirably high Shore A durometer hardness values achieved by preferred composition using the silica treating agents of this invention and a molar ratio of SiH to vinyl within the present range of 0.8 to 2.0, preferably from 1 to 1.5.

Example 2

This example demonstrates the reduction in compression set values imparted to cured elastomers by one of the present silica treating agents in combination with two alkenyl-substituted polydiorganosiloxanes, one of which contains alkenyl radicals on non-terminal silicon atoms (optional ingredient A').

Organosiloxane compositions were prepared by blending to homogeneity in a dough type mixer the entire quantity (3800 parts) of a fume silica having a nominal surface area of 380 $m^2$ per gram, 730.8 parts of diatomaceous earth, 760 parts of hexamethyldisilazane, 109.6 parts water and 4560 parts of a dimethylvinylsiloxy terminated polydimethylsiloxane having a viscosity of about 10 Pa·s at 25°C. (ingredient A). When all the filler had been blended into the resultant mixture 22.7 parts of sym-tetramethyldivinyldisilazane were added. Volatile materials were removed from the resultant mixture by circulating steam through the jacket of the mixer while maintaining the contents of the mixer under reduced pressure.

Following completion of the heating cycle the resultant mixture (I) was blended to homogeneity with 2528.5 parts of ingredient A together with 219.2 parts of a dimethylvinylsiloxy-terminated dimethylsiloxane/methylvinylsiloxane copolymer containing 2 mol percent of methylvinylsiloxane units and exhibiting a viscosity of 0.3 Pa·s (optional ingredient A'), 84.0 parts of a silanol terminated polydimethylsiloxane having a viscosity of about 0.04 Pa·s at 25°C. and containing about 4 weight percent of silicon-bonded hydroxyl groups and 11.7 parts of methylbutynol as a catalyst inhibitor.

Curable compositions were prepared from the resultant mixture by combining 250 gram portions of this mixture with (1) the amount of the organohydrogensiloxane identified as B1 in Example 1 sufficient to provide a molar ratio of silicon-bonded hydrogen atoms to vinyl radicals in the composition of 1.25 and 2) as the platinum-containing hydrosilation catalyst (ingredient C), a reaction product of hexachloroplatinic acid and sym-tetramethyldivinyldisiloxane that had been diluted with a liquid dimethylvinylsiloxy terminated polydimethylsiloxane in an amount sufficient to achieve a platinum content of 0.7 weight percent, based on the weight of both parts of the curable composition. The amount of catalyst, was equivalent to 6.3 parts per million parts by weight of platinum, based on the weight of the complete curable composition.

The composition was cured and evaluated for compression set as described in Example 1. The compression set value was 21 percent. The reason for using the optional ingredient A' was to improve the tear strength of the cured elastomer.

**Claims**

1. An extrudable organosiloxane composition comprising the product obtained by mixing to homogeneity:

(A) 100 parts by weight of a first diorganoalkenylsiloxy terminated polydiorganosiloxane in which the only alkenyl radicals present on the non-terminal silicon atoms thereof result from impurities present in the starting materials or due to rearrangements occuring during preparation, represented by the formula:

$$YR^1{}_2SiO(R^2{}_2SiO)_xSiR^1{}_2Y$$

in which Y represents an alkenyl radical containing from 2 to 10 carbon atoms, $R^1$ and $R^2$ are individually monovalent hydrocarbon radicals or substituted monovalent hydrocarbon radicals containing from 1 to 20

11

carbon atoms, $R^1$ and $R^2$ are substantially free of ethylenic unsaturation and $\underline{x}$ represents a degree of polymerization equivalent to a viscosity of up to 20 Pa·s at 25°C;

(B) an amount sufficient to cure said composition of an organohydrogensiloxane that is miscible with (A) and contains an average of more than two silicon-bonded hydrogen atoms per molecule, where the organic groups present in (A) and (B) are monovalent hydrocarbon or halogenated hydrocarbon radicals;

(C) an hydrosilation catalyst consisting essentially of a platinum-group metal or a compound thereof, the concentration of said catalyst being sufficient to promote curing of said composition at a temperature of from ambient to 250°C,

wherein in order to ensure sufficient miscibility the silicon-bonded hydrocarbon radicals that are present in the highest concentration in ingredients (A), (B) and (C) are selected from the same class, and

(D) from 10 to 60 weight percent, based on the weight of said composition, of finely divided silica as the reinforcing filler which is treated with more than one organosilicon compounds,

characterised in that a sym-tetraalkyldialkenyldisilazane in an amount which constitutes from 1 to 5.0 weight percent of the organosilicon compounds used to treat said filler is present and the molar ratio of silicon-bonded hydrogen atoms in said organohydrogensiloxane alkenyl radicals in all polydiorganosiloxanes present in said curable composition is from 0.8 to 2.0.

2. An extrudable organosiloxane composition according to claim 1, characterised in that the sym-tetraalkyldialkenyldisilazane is present in an amount of from 1 to 4.6 weight percent of the organosilicon compounds used to treat said filler.

3. A composition according to claim 1 where said composition contains from 0.5 to 30 percent based on the combined weight of alkenyl-substituted polydiorganosiloxanes, of a second diorganoalkenylsiloxy-terminated polydiorganosiloxane (A)' represented by formula:

$$Y'R^3{}_2SiO(R^4{}_2SiO)_y(Y'R^4SiO)_zSiR^3{}_2Y'$$

in which Y' represents an alkenyl radical containing from 2 to 10 carbon atoms; $R^3$ and $R^4$ are individually monovalent hydrocarbon radicals or substituted monovalent hydrocarbon radicals and the degree of polymerization represented by the sum of y and z is equivalent to a viscosity of from 0.1 to 10 Pa·s and wherein said ingredient A' contains alkenyl radicals of from 1 to 5 mole percent of the non-terminal repeating siloxane units.

## Patentansprüche

1. Extrudierbare Organosiloxanmischung, enthaltend das Produkt, das man erhält, wenn man bis zur Homogenität mischt:

(A) 100 Gewichtsteile eines ersten Polydiorganosiloxans mit endständigen Diorganoalkenylsiloxygruppen, in dem die einzigen Alkenylreste, die an dessen nicht-endständigen Siliciumatomen vorhanden sind, von Verunreinigungen in den Ausgangsstoffen stammen oder auf Umlagerungen während der Herstellung zurückgehen, wiedergegeben durch die Formel:

$$YR^1{}_2SiO(R^2{}_2SiO)_xSiR^1{}_2Y,$$

in der Y einen Alkenylrest mit 2 bis 10 Kohlenstoffatomen bedeutet, $R^1$ und $R^2$ jeweils für sich einwertige Kohlenwasserstoffreste oder substituierte einwertige Kohlenwasserstoffreste mit 1 bis 20 Kohlenstoffatomen bezeichnen, $R^1$ und $R^2$ im wesentlichen frei von ethylenischen Doppelbindungen sind und $\underline{x}$ einen Polymerisationsgrad repräsentiert, der einer Viskosität von bis zu 20 Pa·s bei 25°C äquivalent ist;

(B) eine für die Härtung der Mischung ausreichende Menge eines Organohydrogensiloxans, das mit (A) mischbar ist und durchschnittlich mehr als zwei an Silicium gebundene Wasserstoffatome pro Molekül enthält, wobei die in (A) und (B) vorhandenen organischen Reste einwertige Kohlenwasserstoff- oder halogenierte Kohlenwasserstoffreste sind;

(C) einen Hydrosilylierungskatalysator, der im wesentlichen aus einem Metall der Platingruppe oder einer Verbindung davon besteht, wobei die Konzentration des Katalysators ausreicht, um die Härtung der Mischung bei einer Temperatur von Umgebungstemperatur bis 250°C zu fördern;
wobei die in den Bestandteilen (A), (B) und (C) in der höchsten Konzentration vorhandenen an Silicium gebundenen Kohlenwasserstoffreste aus derselben Klasse ausgewählt sind, um genügende Mischbarkeit sicherzustellen, und
(D) 1 bis 60 Gewichtsprozent, bezogen auf das Gewicht der Mischung, fein verteiltes Siliciumdioxid als den verstärkenden Füllstoff, der mit mehr als einer Organosiliciumverbindung behandelt wird,

dadurch gekennzeichnet, daß ein symm-Tetraalkyldialkenyldisilazan in einer Menge vorhanden ist, die 1 bis 5,0 Gewichtsprozent der Organosiliciumverbindungen darstellt, die zur Behandlung des Füllstoffs verwendet werden, und das Molverhältnis der an Silicium gebundenen Wasserstoffatome in dem Organohydrogensiloxan zu den Alkenylresten in allen in der härtbaren Mischung vorhandenen Polydiorganosiloxanen von 0,8 bis 2,0 beträgt.

2. Extrudierbare Organosiloxanmischung nach Anspruch 1, dadurch gekennzeichnet, daß das symm-Tetraalkyldialkenyldisilazan in einer Menge von 1 bis 4,6 Gewichtsprozent der Organosiliciumverbindungen vorhanden ist, die zur Behandlung des Füllstoffs verwendet werden.

3. Mischung nach Anspruch 1, wobei die Mischung 0,5 bis 30 Gewichtsprozent, bezogen auf das Gesamtgewicht der Alkenylsubstituierten Polydiorganosiloxane, eines zweiten Polydiorganosiloxans (A)' mit endständigen Diorganoalkenylsiloxygruppen enthält, das durch die Formel:

$$Y'R^3_2SiO(R^4_2SiO)_y(Y'R^4SiO)_zSiR^3_2Y'$$

wiedergegeben wird, in der Y' einen Alkenylrest mit 2 bis 10 Kohlenstoffatomen bedeutet, $R^3$ und $R^4$ jeweils für sich einwertige Kohlenwasserstoffreste oder substituierte einwertige Kohlenwasserstoffreste bezeichnen und der durch die Summe von $y$ und $z$ repräsentierte Polymerisationsgrad einer Viskosität von 0,1 bis 10 Pa·s äquivalent ist und wobei der Bestandteil A' Alkenylreste an 1 bis 5 Molprozent der nicht endständigen, sich wiederholenden Siloxan-Einheiten enthält.

## Revendications

1. Une composition extrudable à base d'organosiloxanes comprenant le produit obtenu en mélangeant jusqu'à homogénéité

(A) 100 parties en poids d'un premier polydiorganosiloxane terminé par des groupes diorganoalcénylsiloxy dans lequel les seuls radicaux alcényles présents sur les atomes de silicium non terminaux du polymère proviennent d' impuretés présentes dans les produits de départ ou résultent de réarrangements ayant lieu au cours de la préparation, représenté par la formule

$$YR^1_2SiO\ (R^2_2SiO)_xSiR^1_2Y$$

dans laquelle Y représente un radical alcényle comptant 2 à 10 atomes de carbone, $R^1$ et $R^2$ sont individuellement des radicaux hydrocarbonés monovalents ou des radicaux hydrocarbonés monovalents substitués comptant 1 à 20 atomes de carbone, $R^1$ et $R^2$ sont sensiblement dépourvus d'insaturation éthylénique et $x$ représente un degré de polymérisation équivalent à une viscosité à 25 °C non supérieure à 20 Pa·s ;
(B) une quantité suffisante pour durcir ladite composition d'un organohydrogénosiloxane qui est miscible à l'ingrédient (A) et renferme une moyenne de plus de 2 atomes d'hydrogène liés au silicium par molécule, les groupes organiques présents dans les ingrédients (A) et (B) étant des groupes hydrocarbonés ou hydrocarbonés halogénés monovalents ;
(C) un catalyseur d'hydrosilation essentiellement constitué d'un métal du groupe du platine ou d'un composé d'un tel métal, la concentration dudit catalyseur étant suffisante pour provoquer le durcissement de ladite composition à une température de l'ambiante à 250 °C,
où, à l'effet d'obtenir une miscibilité suffisante, les radicaux hydrocarbonés liés au silicium présents sous la plus forte concentration dans les ingrédients (A), (B) et (C) sont choisis dans la même classe, et
(D) de 10 à 60 pour cent en poids, sur la base du poids de ladite composition, de silice finement divisée constituant la charge de renforcement qui est traitée avec plusieurs composés organosiliciés,

caractérisée en ce qu'un sym-tétraalkyldialcényldisilazane en une quantité qui représente 1 à 5 pour cent en poids des composés organosiliciés utilisés pour traiter ladite charge est présent et en ce que le rapport molaire des atomes d'hydrogène liés au silicium dudit organohydrogénosiloxane aux radicaux alcényles de tous les polydiorganosiloxanes présents dans ladite composition durcissable est de 0,8 à 2,0.

2. Une composition durcissable à base d'organosiloxanes selon la revendication 1, caractérisée en ce que le sym-tétraalkyldialcényldisilazane est présent en une quantité de 1 à 4,6 pour cent du poids des composé organosiliciés utilisés pour traiter ladite charge.

3. Une composition selon la revendication 1 renfermant 0,5 à 30 pour cent, sur la base du poids total des polydiorganosiloxanes alcénylés, d'un deuxième polydiorganosiloxane, (A'), terminé par des groupes diorganoalcénylsiloxy, représenté par la formule

$$Y'R_2^3SiO(R_2^4SiO)_y(Y'R^4SiO)_2SiR_2^3Y'$$

dans laquelle Y' représente un radical alcényle comptant 2 à 10 atomes de carbone, $R^3$ et $R^4$ sont individuellement des radicaux hydrocarbonés monovalents ou des radicaux hydrocarbonés monovalents substitués et le degré de polymérisation représenté par la somme y + z est équivalente à une viscosité de 0,1 à 10 Pa.s, ledit ingrédient A' renfermant des radicaux alcényles sur 1 à 5 moles pour cent des motifs répétitifs siloxanes non terminaux.